# EUROPÄISCHE PATENTSCHRIFT

(11) **EP 3 207 420 B1**
(45) Veröffentlichungstag und Bekanntmachung des Hinweises auf die Patenterteilung: **18.07.2018**
(21) Anmeldenummer: 15763196.1
(22) Anmeldetag: 03.09.2015
(51) Int. Cl.: G02B 27/01, B60R 11/02, B60K 35/00, B60K 37/04

(54) **GEHÄUSE FÜR EIN HEAD-UP-DISPLAY EINES KRAFTFAHRZEUGS UND VERFAHREN ZUM BEREITSTELLEN EINES GEHÄUSES FÜR EIN HEAD-UP-DISPLAY**
HOUSING FOR A HEAD-UP DISPLAY OF A MOTOR VEHICLE AND METHOD FOR PROVIDING A HOUSING FOR A HEAD-UP DISPLAY
BOÎTIER POUR UN AFFICHAGE TÊTE HAUTE DESTINÉ À UN VÉHICULE ET PROCÉDÉ SERVANT À FOURNIR UN BOÎTIER POUR UN AFFICHAGE TÊTE HAUTE

(30) Priorität: 17.10.2014 DE 102014015378
(43) Veröffentlichungstag der Anmeldung: 23.08.2017
(73) Patentinhaber: Audi AG, 85045 Ingolstadt (DE)
(72) Erfinder: WALL, Christian, 85122 Hitzhofen (DE)
(86) Internationale Anmeldenummer: PCT/EP2015/001774
(87) Internationale Veröffentlichungsnummer: WO 2016/058658

(56) Entgegenhaltungen:
- EP-A1- 2 407 337
- WO-A2-2009/105847
- DE-A1-102013 202 185
- US-A- 4 082 432
- US-A1- 2005 162 738

## Beschreibung

Die Erfindung betrifft ein Gehäuse für ein Head-up-Display eines Kraftfahrzeugs, das eine Innenwandung aufweist, die zumindest teilweise einen Innenraum für eine bildgebende Projektionseinrichtung zum Projizieren eines virtuellen Bildes in einem Strahlengang auf eine Reflexionsfläche in einem Innenraum des Kraftfahrzeugs begrenzt.

In modernen Kraftfahrzeugen werden immer häufiger Head-up-Displays verbaut, also Anzeigevorrichtungen mit einer bildgebenden Projektionseinrichtung zum Projizieren eines virtuellen Bildes, also einer graphischen Information, in einem Strahlengang auf eine Reflexionsfläche in einem Innenraum des Kraftfahrzeugs, in der Regel auf eine Windschutzscheibe.

Dabei wird das Head-up-Display häufig im Cockpit vor dem Fahrer in einem Bauraum positioniert. Das Head-up-Display besteht aus einer Vielzahl von mechanischen, optischen und elektronischen Einzelkomponenten. Um das virtuelle Bild von der bildgebenden Projektionseinrichtung aus dem Innenraum eines Gehäuses auf die Reflexionsfläche umzulenken, werden Spiegel innerhalb des Gehäuses montiert, die in Abhängigkeit von einem Fahrzeugtyp und einer Windschutzscheibenvariante justiert werden müssen.

Aus der DE 27 47 760 ist ein optisches Sichtgerät bekannt, das einen Akrylblock als Kollimationsspiegel verwendet. Ein Head-up-Display, das einen keilförmigen Glaskörper zum Umlenken von Licht eines Projektors verwendet, ist aus der GB 2 163 869 A bekannt. Der Glaskörper ist dabei innerhalb eines Gehäuses angeordnet, in dem auch den Projektor angebracht ist. Die US 2005/0259034 A1 und EP 2 407 337 A1 beschreiben weitere Head-up-Displays, die zwei innerhalb des Gehäuses montierte flache und/oder gewölbte Spiegel aufweisen. Insbesondere die Herstellung und Montage der inneren Spiegel ist jedoch sehr aufwendig und muss unter Einhaltung geringer Toleranzen erfolgen. Das Befestigen von Spiegeln in das Gehäuse durch Montage zusätzlicher Halter bedingt einen hohen Montageaufwand, zusätzliches Gewicht und Kosten. Der hohe Montageaufwand ist vorwiegend dadurch bedingt, dass die Halterung der Spiegel exakt auf das entsprechende Fahrzeugmodell eingestellt werden muss, um eine Projektion eines digitalen Anzeigeinhaltes auf die Windschutzscheibe zu lenken. Bei zu hoher Belastung der Spiegelhalterungen durch Erschütterungen beginnen die Spiegel zu vibrieren, wodurch sich deren optische Qualität verschlechtert.

Eine der Erfindung zugrunde liegende Aufgabe ist das Bereitstellen eines Head-up-Displays, das weniger anfällig und weniger komplex zu montieren ist.

Die Aufgabe wird jeweils von dem erfindungsgemäßen Head-up-Display, dem erfindungsgemäßen Kraftwagen und dem erfindungsgemäßen Verfahren gemäß den unabhängigen Patentansprüchen gelöst. Vorteilhafte Weiterbildungen der Erfindung sind durch die Unteransprüche gegeben.

Die Erfindung basiert auf der Idee, anstelle einer montierbaren Spiegelanordnung ein Gehäuse bereitzustellen, das mindestens zwei Umlenkbereiche einer Innenwandung aufweist. Dadurch wird bereits mit dem Gehäuse ein an das Fahrzeugmodell angepasstes, robustes Bauteil zum Umlenken eines Strahlengangs einer bildgebenden Projektionseinrichtung bereitgestellt, das zudem auch schnell mit der bildgebenden Projektionseinrichtung nachgerüstet werden kann.

Das erfindungsgemäße Head-up-Display eines Kraftfahrzeugs weist ein Gehäuse mit einer Innenwandung auf, die zumindest teilweise einen Innenraum für eine bildgebende Projektionseinrichtung zum Projizieren eines virtuellen Bildes in einem Strahlengang auf eine Reflexionsfläche in einem Innenraum des Kraftfahrzeugs begrenzt, beispielsweise auf eine Windschutzscheibe. Das Gehäuse ist dabei gekennzeichnet durch mindestens zwei reflektierende Umlenkbereiche der Innenwandung zum Umlenken des Strahlengangs der bildgebenden Projektionseinrichtung (28). Dies kann so verstanden werden, dass die Innenwandung zwei reflektierende Umlenkbereiche aufweist.

Ein Head-up-Display ist dabei eine Anzeigevorrichtung, die eine digitale graphische Information, also ein virtuelles Bild, auf die Reflexionsfläche in das Sichtfeld eines Benutzers projiziert, sodass ein Benutzer seine Kopfhaltung und Blickrichtung beibehalten kann.

Das erfindungsgemäße Gehäuse ist robust und kann Erschütterungen oder Eigenvibrationen bei beispielsweise einer Fahrt über ein Kopfsteinpflaster nahezu vollständig standhalten.. Die Montage oder Demontage des Gehäuses ist sehr einfach zu bewerkstelligen und sehr kostengünstig. Es entfällt eine komplexe Montage vieler Einzelkomponenten, womit auch eine Gewichtsreduzierung und eine Reduktion des benötigten Bauraums einhergeht. Es entfällt ein Befestigen separater Spiegel.

Vorzugsweise wird, um einem Vibrieren des reflektierenden Bereichs besonders wirksam entgegen zu wirken, der verspiegelnde Stoff, also das reflektierende Material, bei einem Herstellungsprozess des Gehäuses durch beispielsweise Abscheiden, beispielsweise chemisches Abscheiden, Aufsputtern oder Aufdampfen beschichtet. Erfindungsgemäß weist der Umlenkbereich eine verspiegelte oder verspiegelnde Schicht auf, welche durch Aufbringen eines verspiegelnden formlosen, verspiegelnden Stoffes oder Materials auf eine dem Innenraum zugewandte Oberfläche eines Grundkörpers der Innenwandung gebildet ist. Vorzugsweise weist der Umlenkbereich dabei eine verspiegelnde Schicht auf, um die genannten Vorteile zu erreichen.

Darunter ist zu verstehen, dass die verspiegelte oder verspiegelnde Schicht, also der Spiegel an sich, erst durch Aufbringen des formlosen, verspiegelnden Stoffes oder Materials entsteht. Die Innenwandung des Gehäuses wird also in dem Umlenkbereich aus dem Grundkörper mit dem formlosen, verspiegelnden Stoff oder Material gebildet. Mit anderen Worten ist der formlose, verspiegelnde Stoff wie "aus einem Guss" an die Innenwandung angeformt. Ein formloser Stoff ist dabei beispielsweise ein flüssiger, gasförmiger, in einer Lösung vorliegender oder ein als Puder vorliegender Stoff. Hierdurch ergibt sich eine verringerte Komplexität und eine erhöhte Robustheit des Umlenkbereiches, sowie ein Verringern des benötigten Bauraums in dem Kraftfahrzeug.

Um einen geringeren Bauraum in dem Kraftfahrzeug für das Gehäuse in Anspruch zu nehmen müssen, ist das Gehäuse durch mindestens zwei Umlenkbereiche der Innenwandung gekennzeichnet. Hierdurch stehen für eine Anbringung der Projektionsvorrichtung alternative Möglichkeiten zur Verfügung.

Gemäß einer besonders vorteilhaften Ausführungsform des Gehäuses kann mindestens ein Umlenkbereich und ein Teilbereich der Innenwandung mit einem Durchtrittsbereich in einem vorbestimmten Winkel zueinander stehen, wobei der vorbestimmte Winkel einen Projektionsweg zum Führen des Strahlengangs durch den Durchtrittsbereich bereitstellt. Hierdurch wird ein präzise ausgerichteter Projektionsweg zur Reflexionsfläche bereitgestellt. Mindestens ein Umlenkbereich kann eine Krümmung aufweisen, also konvex oder konkav geformt sein. Diese Ausführungsform ermöglicht, dass die Umlenkeinrichtung an eine fahrzeugspezifische Krümmung und/oder an eine fahrzeugspezifische Herstelltoleranz einer Windschutzscheibenvariante des Kraftfahrzeugs angepasst ist.

Vorteilhafterweise besteht das Gehäuse zumindest teilweise aus einem Kunststoff, vorzugsweise aus Acrylglas, Polystyrol, Polycarbonat, Dibond oder Plexiglas. Mit anderen Worten ist das Gehäuse vorzugsweise zumindest teilweise aus Acrylglas, Polystyrol, Polycarbonat oder Plexiglas gebildet, weist also vorzugsweise einen dieser Kunststoffe auf. Eine aus einem solchen Kunststoff geformte Innenwandung kann bei entsprechender Herstellung nahezu keine Schlieren aufweisen und ist besonders verzugsarm.

Das erfindungsgemäße Head-up-Display kann zusätzlich eine Projektionseinrichtung und/oder in einer Combiner-Variante eine Combinerscheibe ("Kombinierer von Informationen") umfassen. Es ergeben sich die bereits oben genannten Vorteile und benötigt keine separaten Spiegel.

Die oben gestellte Aufgabe wird ebenfalls durch einen erfindungsgemäßen Kraftwagen gelöst, das ein erfindungsgemäßes Head-up-Display und ein Gehäuse einer oben beschriebenen Ausführungsformen umfasst. Der Kraftwagen ist dabei vorzugsweise ein Personenkraftwagen. Es ergeben sich auch hier die bereits oben genannten Vorteile.

Die oben gestellte Aufgabe wird ebenfalls durch ein erfindungsgemäßes Verfahren zum Bereitstellen eines Head-up-Displays gelöst. In einem ersten Schritt wird ein Grundkörper der Innenwandung aus einem Trägermaterial bereitgestellt. Dies erfolgt durch Formen des Gehäuses mit mindestens einem Bereich einer Innenwandung des Gehäuses mit einer dem Innenraum zugewandten Oberfläche, wobei die Oberfläche des Grundkörpers oder ein Bereich der Oberfläche des Grundkörpers einen vorbestimmten Winkel zu einem Teilbereich der Innenwandung mit einem Durchtrittsbereich aufweist, sodass der vorbestimmte Winkel einen Projektionsweg zum Führen des Strahlengangs durch den Durchtrittsbereich bereitstellt. Es erfolgt ein Verspiegeln der dem Innenraum zugewandten Oberfläche des Grundkörpers durch Aufbringen eines verspiegelnden formlosen Stoffes oder Materials auf der dem Innenraum zugewandten Oberfläche des Grundkörpers. Das Verspiegeln umfasst vorzugsweise ein Abscheiden, chemisches Abscheiden, Aufdampfen oder Aufsputtern des verspiegelnden formlosen Stoffes. Es ergeben sich hierbei die bereits oben genannten Vorteile.

Die Erfindung wird anhand der beigefügten Zeichnungen noch einmal durch konkrete Ausführungsbeispiele näher erläutert. Die gezeigten Beispiele stellen bevorzugte Ausführungsformen der Erfindung dar. Funktionsgleiche Elemente weisen in den Figuren dieselben Bezugszeichen auf. Es zeigt:
- Fig. 1: eine schematische Skizze zu einer Ausführungsform des erfindungsgemäßen Head-up-Displays und einer Ausführungsform des erfindungsgemäßen Kraftwagens, und
- Fig. 2: eine schematische Skizze zu einer Ausführungsform des erfindungsgemäßen Verfahres.

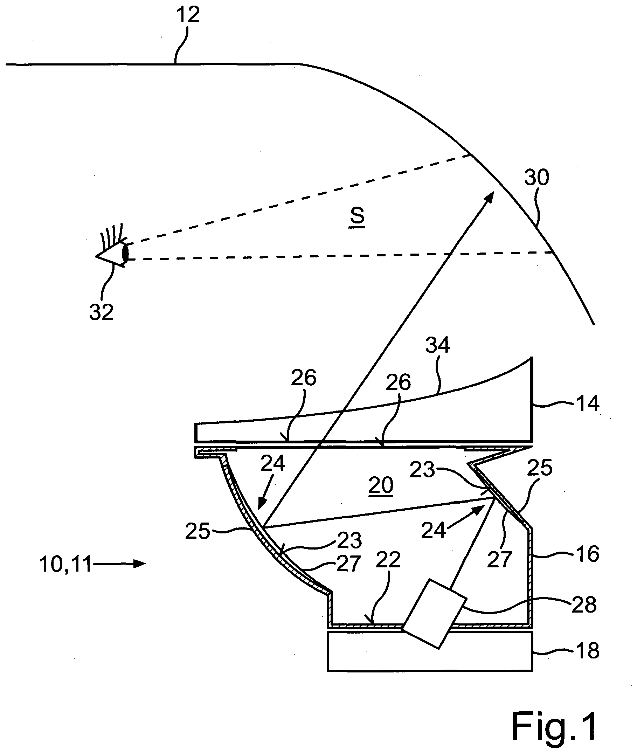

Die Fig. 1 zeigt ein Head-up-Display 10 eines Kraftfahrzeugs 12, beispielsweise einen Kraftwagen 12, wie zum Beispiel einen Personenkraftwagen, mit einem Gehäuse 11 und einer Projektionseinrichtung 28. Das Gehäuse 11 des Head-up-Displays 10 kann beispielsweise ein Gehäuseoberteil 14, ein Gehäuseunterteil 16 und beispielsweise einen Kühlkörper 18 umfassen. Ein Innenraum 20 des Gehäuses 11 des Head-up-Displays 10 wird dabei zumindest teilweise von einer Innenwandung 22 begrenzt. In dem Innenraum 20 kann eine Projektionseinrichtung 28 angeordnet sein, beispielsweise ein Projektor.

Die Innenwandung 22 umfasst zwei reflektierende Umlenkbereiche 24, die beispielsweise an gegenüberliegenden Bereichen der Innenwandung 22 liegen. Der Umlenkbereich 24 weist dabei einen verspiegelnden Stoff, also ein reflektierendes Material, auf, das vorzugsweise als Schicht (27) der Innenwandung 22 ausgestaltet ist. Silber, Aluminium oder Gold als bevorzugter verspiegelnder Stoff ermöglicht eine Langzeitstabilität der Umlenkeinrichtung 24.

In dem Umlenkbereich 24 weist dabei eine dem Innenraum 20 zugewandte Oberfläche 23 eines Grundkörpers 25 der Innenwandung 22 vorzugsweise eine sehr präzis gearbeitete, glatte Oberfläche 23 auf, die für eine Verspiegelung geeignet ist. Die dem Innenraum 20 zugewandte Oberfläche 23 des Grundkörpers 25 kann mit dem formlosen verspiegelnden Stoff nach dessen Aufbringen auf die Oberfläche 23 die verspiegelnde Schicht 27 bilden. Mit anderen Worten wird die Verspiegelung direkt über das speziell geformte Gehäuse 11 gebildet.

Der Umlenkbereich 24 kann gekrümmt sein, also konkav oder konvex geformt, wobei die Krümmung unterschiedlich ausgestaltete Krümmungswinkel aufweisen kann. Der Umlenkbereich 24 kann bevorzugt in einem vorbestimmten Winkel zu einem Teilbereich 26 der Innenwandung 22 mit einem Durchtrittsbereich angeordnet sein. Durch den vorbestimmten Winkel kann ein Projektionsweg P für einen Strahlengang des von der bildgebenden Projektionseinrichtung 28 projizierten virtuellen Bildes bereitgestellt werden, sodass der Projektionsweg P das Licht durch den Durchtrittsbereich 26 führt. Der Winkel kann von einem Fachmann mit geeigneten mathematischen Berechnungsprogrammen ermittelt und damit vorbestimmt werden. Tritt der Strahlengang entlang des Projektionsweges P durch den Durchtrittsbereich 26 hindurch, trifft er auf eine Reflexionsfläche 30 des Innenraums des Kraftfahrzeugs, beispielsweise auf eine Windschutzscheibe oder eine Kombinierscheibe, wobei eine Combinierscheibe eine lichtdurchlässige Scheibe umfasst ("Kombinierer von Informationen", "Combiner"). Eine beispielhafte separate Combinerscheibe vereinfacht das Head-up-Display durch eine vereinfachte Geometrie der Umlenkeinrichtung 24, womit ein Nachrüsten eines in einem Bauraum vorhandenen Gehäuses mit einer Projektionseinrichtung 28 und/oder einer lichtdurchlässigen Scheibe stark erleichtert wird.

Eine in der Fig. 1 gezeigten beispielhaften Sichtblende 34 kann den Benutzer von dem Strahlengang abschirmen. In der Fig. 1 ist gezeigt, dass ein Benutzer 32 das so angezeigte virtuelle Bild in seinem Sichtfeld S sieht. Bei dem Anformen des Gehäuses kann der Winkel so vorbestimmt werden, dass eine Krümmung der Reflexionsfläche 30 berücksichtigt wird, die beispielsweise durch eine Variante der Reflexionsfläche 30 bedingt ist.

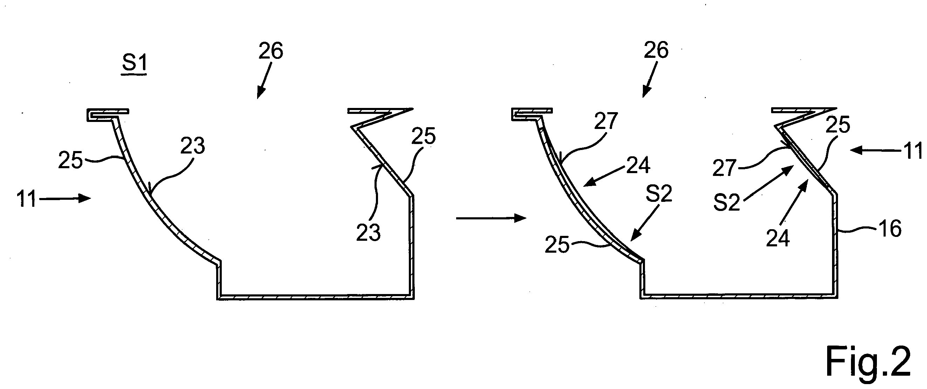

Die Fig. 2 zeigt ein Ausführungsbeispiel eines erfindungsgemäßen Verfahrens zum Bereitstellen eines Gehäuses 11 für ein Head-up-Display 10. Das Gehäuse 11 kann vorzugsweise durch ein Spritzgussverfahren geformt werden. Das Gehäuse 11 kann dabei vorzugsweise so geformt werden, dass die Oberfläche 23 des Grundkörpers 25 in einem vorbestimmten Winkel zu einem Durchtrittsbereich 26 und/oder zu einer optionalen Halteeinrichtung (in der Fig. 1 nicht gezeigt) für die bildgebende Projektionseinrichtung 28 steht. Ein bevorzugtes Trägermaterial des Gehäuses 11 und damit des Grundkörpers 25 ist dabei vorzugsweise ein Kunststoff aus zum Beispiel Acrylglas, Polystyrol, Polycarbonat oder Plexiglas. Der Durchtrittsbereich 26 umfasst beispielsweise einen Teilbereich 26 der Innenwandung, die ein zumindest teilweise transparentes Material aufweist, und/oder eine Durchtrittsöffnung.

Der verspiegelnde Stoff kann vorzugsweise durch ein dem Fachmann bekanntes Beschichtungsverfahren, beispielsweise durch Abscheiden, beispielsweise chemisches Abscheiden, Aufdampfen oder Aufsputtern, auf die dem Innenraum 20 zugewandten Oberfläche 23 des Grundkörpers 25 angeordnet werden und so mit der Oberfläche 23 des Grundkörpers 25 die verspiegelte oder verspiegelnde Schicht 27 bilden. Die verspiegelte oder verspiegelnde Schicht 27 kann alternativ oder zusätzlich beispielsweise mit einem Plasma-Ionen gestützten Beschichtungsverfahren auf dem Trägermaterial aufgebracht werden.

Das Gehäuse 11 kann vorzugsweise in einen Bauraum des Kraftfahrzeugs 12 angeordnet werden, vorzugsweise in einen Bauraum oberhalb des Armaturenbretts. Vorzugsweise kann das Gehäuse 11 fest in dem Bauraum verankert werden, um Eigenvibrationen während einer Inbetriebnahme des Kraftfahrzeugs 12 zu vermeiden.

Das oben gezeigte Ausführungsbeispiel veranschaulicht das Prinzip eines Head-up-Displays 10, dessen Gehäuse 11, anstelle von beispielsweise zwei inneren Spiegeln als separate Teile, direkt als speziell geformtes und verspiegeltes Gehäuse 11 bereitgestellt wird. Mit anderen Worten wird der optische Pfad direkt über das speziell geformte Gehäuse 11 gebildet. Dabei kann für das Gehäuse 11 vorzugsweise ein geeignetes Material gewählt werden, das die nötige Genauigkeit für die optische Qualität der beispielhaften Spiegel liefern kann. Nach beispielsweise einem Spritzgussprozess kann der jeweilige Grundkörper 25 von zwei Umlenkbereichen 24 oder zwei optisch aktiven Flächen als Oberflächen 23, beispielsweise in einem Beschichtungsverfahren verspiegelt werden.

Unter Anderem ergeben sich die Vorteile der Reduzierung einer Anzahl von Einzelteilen des Head-up-Displays 10, eine einfache Montage und/oder Demontage der gesamten Einheit, eine Gewichtsreduzierung und eine Kostenreduzierung.

## Patentansprüche

1. Head-up-Display (10) für ein Kraftfahrzeug (12), mit einem Gehäuse (11), das eine Innenwandung (22) aufweist, die zumindest teilweise einen Innenraum (20) für eine bildgebende Projektionseinrichtung (28) zum Projizieren eines virtuellen Bildes in einem Strahlengang auf eine Reflexionsfläche (30) in einem Innenraum des Kraftfahrzeugs (12) begrenzt, mit mindestens zwei reflektierenden Umlenkbereichen (24) der Innenwandung (22) zum Umlenken des Strahlengangs der bildgebenden Projektionseinrichtung (28),
**dadurch gekennzeichnet, dass** jeder Umlenkbereich (24) eine verspiegelte oder verspiegelnde Schicht (27) aufweist, welche durch Aufbringen eines verspiegelnden formlosen Stoffes oder Materials auf eine dem Innenraum (20) zugewandte Oberfläche (23) eines Grundkörpers (25) der Innenwandung (22) gebildet ist.

2. Head-up-Display (10) nach einem der vorhergehenden Ansprüche, **dadurch gekennzeichnet, dass**
mindestens ein Umlenkbereich (24) und ein Teilbereich (26) der Innenwandung (22) mit einem Durchtrittsbereich in einem vorbestimmten Winkel zueinander stehen, wobei der vorbestimmte Winkel einen Projektionsweg zum Führen des Strahlengangs durch den Durchtrittsbereich bereitstellt.

3. Head-up-Display (10) nach einem der vorhergehenden Ansprüche, **dadurch gekennzeichnet, dass**
mindestens ein Umlenkbereich (24) eine Krümmung aufweist.

4. Head-up-Display (10) nach einem der vorhergehenden Ansprüche, **dadurch gekennzeichnet, dass**
das Gehäuse (11) zumindest teilweise aus einem Kunststoff besteht, vorzugsweise aus Acrylglas, Polystyrol, Polycarbonat oder Plexiglas.

5. Kraftfahrzeug (12), umfassend ein Head-up-Display (10) nach einem der Ansprüche 1 bis 4.

6. Verfahren zum Bereitstellen eines Head-up-Displays (10) für ein Kraftfahrzeug, umfassend die Schritte:
- Bereitstellen eines Grundkörpers (25) einer Innenwandung (22) eines Gehäuses (11) mit einer dem Innenraum (20) zugewandten Oberfläche (23) durch Formen des Gehäuses (11) aus einem Trägermaterial (S1), wobei die Oberfläche (23) des Grundkörpers (25) einen vorbestimmten Winkel zu einem Teilbereich (26) der Innenwandung (22) mit einem Durchtrittsbereich aufweist, sodass der vorbestimmte Winkel einen Projektionsweg zum Führen des Strahlengangs durch den Durchtrittsbereich bereitstellt, und
- Bilden zweier Umlenkbereiche (24) durch Verspiegeln der dem Innenraum (20) zugewandten Oberfläche (23) des Grundkörpers (25, S2) durch Aufbringen eines verspiegelnden formlosen Stoffes oder Materials auf der dem Innenraum (20) zugewandten Oberfläche (23) des Grundkörpers (25).

7. Verfahren nach Anspruch 6, wobei das Verspiegeln ein Abscheiden, Aufdampfen oder Aufsputtern des verspiegelnden formlosen Stoffes oder Materials umfasst.

## Claims

1. Head-up display (10) for a motor vehicle (12), with a housing (11) that has an inner wall (22), which at least partially bounds an interior (20) for an imaging projection device (28) for projecting a virtual image in a beam path onto a reflection surface (30) in an interior of the motor vehicle (12), with at least two reflective deflecting regions (24) of the inner wall (22) for deflecting the beam path of the imaging projection device (28), **characterised in that** each deflecting region (24) has a mirror-coated or mirror-coating-providing layer (27), which is formed by applying a mirror-coating-providing shapeless substance or material to a surface (23) of a main body (25) of the inner wall (22) facing the interior (20).

2. Head-up display (10) according to any one of the preceding claims, **characterised in that** at least one deflecting region (24) and one partial region (26) of the inner wall (22) are at a predetermined angle to each other with a passage region, wherein the predetermined angle provides a projection path for guiding the beam path through the passage region.

3. Head-up display (10) according to any one of the preceding claims, **characterised in that** at least one deflecting region (24) has a curvature.

4. Head-up display (10) according to any one of the preceding claims, **characterised in that** the housing (11) consists at least partially of a plastic, preferably of acrylic glass, polystyrene, polycarbonate or Plexiglas.

5. Motor vehicle (12), comprising a head-up display (10) according to any one of claims 1 to 4.

6. Method for providing a head-up display (10) for a motor vehicle, comprising the steps:
- provision of a main body (25) of an inner wall (22) of a housing (11) with a surface (23) facing the interior (20) through shaping of the housing (11) from a carrier material (S1), wherein the surface (23) of the main body (25) has a predetermined angle to a partial region (26) of the inner wall (22) with a passage region, so that the predetermined angle provides a projection path for guiding the beam path through the passage region, and
- formation of two deflecting regions (24) through mirroring of the surface (23) of the main body (25, S2) facing the interior (20) by applying a mirror-coating-providing shapeless substance or material to the surface (23) of the main body (25) facing the interior (20).

7. Method according to claim 6, wherein the mirroring comprises depositing, vapour deposition or sputtering of the mirror-coating-providing shapeless substance or material.

## Revendications

1. Affichage tête haute (10) pour un véhicule automobile (12), avec un boîtier (11), qui présente une paroi intérieure (22), qui délimite au moins en partie un espace intérieur (20) pour un dispositif de projection (28) d'imagerie servant à projeter une image virtuelle dans un chemin optique sur une surface réfléchissante (30) dans un habitacle du véhicule automobile (12), avec au moins deux zones de déviation (24) réfléchissantes de la paroi intérieure (22) servant à dévier le chemin optique du dispositif de projection (28) d'imagerie,
**caractérisé en ce que**
chaque zone de déviation (24) présente une couche (27) réfléchie ou réfléchissante, laquelle est formée par l'application d'une matière ou d'un matériau sans forme réfléchissant€ sur une surface (23), tournée vers l'habitacle (20), d'un corps de base (25) de la paroi intérieure (22).

2. Affichage tête haute (10) selon l'une quelconque des revendications précédentes,
**caractérisé en ce que**
au moins une zone de déviation (24) et une zone partielle (26) de la paroi intérieure (22) sont situées l'une par rapport à l'autre selon un angle prédéfini avec une zone de passage, dans lequel l'angle prédéfini fournit un trajet de projection servant à guider le chemin optique à travers la zone de passage.

3. Affichage tête haute (10) selon l'une quelconque des revendications précédentes,
**caractérisé en ce que**
au moins une zone de déviation (24) présente une incurvation.

4. Affichage tête haute (10) selon l'une quelconque des revendications précédentes,
**caractérisé en ce que**
le boîtier (11) est constitué au moins en partie d'une matière plastique, de préférence de verre acrylique, de polystyrène, de polycarbonate ou de plexiglas.

5. Véhicule automobile (12) comprenant un affichage tête haute (10) selon l'une quelconque des revendications 1 à 4.

6. Procédé servant à fournir un affichage tête haute (10) pour un véhicule automobile comprenant les étapes :
- de fourniture d'un corps de base (25) d'une paroi intérieure (22) d'un boîtier (11) avec une surface (23) tournée vers l'habitacle (20) en formant le boîtier (11) à partir d'un matériau de support (S1), dans lequel la surface (23) du corps de base (25) présente un angle prédéfini par rapport à une zone partielle (26) de la paroi intérieure (22) avec une zone de passage, si bien que l'angle prédéfini fournit un trajet de projection servant à guider le chemin optique à travers la zone de passage, et
- de formation de deux zones de déviation (24) en réfléchissant la surface (23), tournée vers l'habitacle (20), du corps de base (25, S2) en appliquant une matière ou un matériau sans forme réfléchissant(e) sur la surface (23), tournée vers l'habitacle (20), du corps de base (25).

7. Procédé selon la revendication 6, dans lequel le réfléchissement comprend un dépôt, une application en phase vapeur ou une application par pulvérisation de la matière ou du matériau sans forme réfléchissant(e).
